# EUROPÄISCHE PATENTANMELDUNG

(11) **EP 2 551 647 A1**
(43) Veröffentlichungstag der Anmeldung: **30.01.2013**
(21) Anmeldenummer: 11194555.6
(22) Anmeldetag: 20.12.2011
(51) Int. Cl.: G01F 1/696

(54) **Verbrennungsmotorabgas-Massenstromsensor mit einem Heißfilm-Anemometer**

(30) Priorität: 29.07.2011 DE 102011052305
(71) Anmelder: Pierburg GmbH, 41460 Neuss (DE)
(72) Erfinder: Grimm, Karsten, 52064 Aachen (DE); Tönnesmann, Andreas, 52066 Aachen (DE); Nigrin, Sven, 40468 Düsseldorf (DE)
(74) Vertreter: Patentanwälte ter Smitten Eberlein Rütten Partnerschaftsgesellschaft

(57) **Zusammenfassung**

Die Erfindung bezieht sich auf einen Massenstromsensor (20) für das Abgas eines Verbrennungsmotors (10) zur Bestimmung des Abgas-Massenstroms.

Der Massenstromsensor (20) weist ein Heißfilm-Anemometer (22) auf, das einen Temperatursensor (28), ein elektrisches Heizelement (30) und eine Steuerungsvorrichtung (24) mit einem elektrischen Heizelement-Versorgungsmodul (34) und mit einem Auswertemodul (40) aufweist. Das Auswertemodul (40) ermittelt in Abhängigkeit von der durch den Temperatursensor (28) ermittelten Abgastemperatur tₐ und der von dem Versorgungsmodul (34) gelieferten elektrischen Heizleistung P den Abgas-Massenstrom. Das Heizelement-Versorgungsmodul (34) ist ein Konstantspannungs-Versorgungsmodul und betreibt das Heizelement (30) mit einer konstanten Versorgungsspannung U.

## Beschreibung

Die Erfindung bezieht sich auf einen Massenstromsensor mit einem Heißfilm- Anemometer zur Bestimmung des Abgas-Massenstroms eines Kfz-Verbrennungsmotors.

Bei einem Heißfilm-Anemometer ist zur Bildung des Heizelementes ein elektrischer Widerstand in Form eines dünnen Metallfilms auf einer Trägerplatte aufgebracht. Im Betrieb wird das Heizelement von einem elektrischen Heizelement-Versorgungsmodul mit der Heizleistung P auf die Heizelement-Temperatur tₕ gebracht. Eine an dem Heizelement vorbeiziehende Gas-Strömung mit der Geschwindigkeit v und der Gas-Temperatur tₐ, die von dem Temperatursensor ermittelt wird, kühlt das Heizelement ab, bis sich ein Gleichgewicht zwischen der elektrisch zugeführten Heizleistung P und der thermisch abgeführten Wärmemenge Q einstellt. Je größer die Geschwindigkeit v und die Differenz zwischen der Heizelement-Temperatur tₕ und der Gas-Temperatur tₐ ist, desto stärker ist die von dem Heizelement abgeführte Wärmemenge. Aus den Temperaturen tₐ, tₕ des Gases und des Heizelementes sowie aus der Heizleistung P bestimmt ein Auswertemodul den Abgas-Massenstrom.

Während ein Heißfilm-Anemometer als Massenstromsensor im Ansaugtrakt eines Verbrennungsmotors häufig eingesetzt wird, wird es im Abgastrakt in der Praxis bisher nicht verwendet, da das Heißfilm-Anemometer prinzipbedingt empfindlich in Bezug auf Ablagerungen in Form von Ruß und zu hohe Temperaturen ist.

Aus DE 10 2006 030 786 A1 ist ein Heißfilm-Anemometer für die Bestimmung eines Abgas-Massenstroms bekannt, bei dem das Heizelement mit einer konstanten Temperaturdifferenz zu der von dem Temperatursensor ermittelten Abgas-Temperatur betrieben wird. Dies hat den Vorteil, dass die Temperatur-Differenz Ast zwischen der Abgas-Temperatur tₐ und der Heizelement-Temperatur tₕ stets bekannt ist, so dass die Ermittlung des Abgas-Massenstroms sehr einfach ist.

Das Heizelement muss zur Vermeidung von Rußablagerung stets bei einer Temperatur tₕ von mindestens 250 °C betrieben werden. Um dies auch bei einer niedrigen Abgas-Temperatur tₐ von beispielsweise 50 °C sicherstellen zu können, muss die konstante Temperatur-Differenz Δt mindestens 200°C betragen. Bei hohen Abgas-Temperaturen tₐ von 500°C und mehr ergeben sich hieraus jedoch sehr hohe Heizelement-Temperaturen tₕ von (weit) über 700 °C, die das Heizelement stark beanspruchten beziehungsweise beschädigen oder zerstören können.

Ferner ist die Regelung der Heizelement-Temperatur tₕ auf eine konstante Temperatur-Differenz Δt anspruchsvoll, und erfordert entweder eine aufwändige Hardware in Form einer Wheatstone- Brücke oder einen aufwändigen Software-Regelalgorithmus, der erhebliche Rechenkapazität des Prozessors beansprucht.

Aufgabe der Erfindung ist es demgegenüber, einen einfachen und haltbaren Verbrennungsmotorabgas-Massenstromsensor mit einem Heißfilm-Anemometer zu schaffen.

Diese Aufgabe wird erfindungsgemäß gelöst mit dem Verbrennungsmotorabgas-Massenstromsensor mit den Merkmalen des Anspruchs 1.

Das Heizelement-Versorgungsmodul ist erfindungsgemäß als ein Konstantspannungs-Versorgungsmodul ausgebildet, das das Heizelement mit einer konstanten Versorgungsspannung U betreibt.

Der Innenwiderstand des Heizelementes steigt mit steigender Heizelement-Temperatur, so dass - bei konstanter Versorgungsspannung U - bei hohen Heizelement-Temperaturen tₕ die elektrische Heizenergie, und damit auch die Temperaturdifferenz Δt zwischen der Abgastemperatur tₐ und der Heizelement-Temperatur tₕ, mit zunehmender Heizelement-Temperatur sinkt. Bei niedrigen Heizelement-Temperaturen ist die elektrischer Heizleistung P jedoch relativ hoch, so dass hierdurch eine hohe Temperaturdifferenz Δt eingestellt wird, die bei kleinen Abgas-Temperaturen tₐ eine relativ hohe Heizelement-Temperatur tₕ sicherstellt. Eine hohe Temperaturdifferenz Δt zwischen dem Abgas und dem Heizelement führt zu thermophoretischen Effekten, die eine Rußanlagerung an das Heizelement erheblich reduzieren. Ferner bewirken Temperaturen des Heizelementes von über 400 °C einen Abbrand gegebenenfalls angelagerter Rußpartikel. Bei niedrigen Abgas-Temperaturen tₐ ist beim Betreiben des Heizelementes mit einer konstanten Versorgungsspannung sowohl eine hohe Temperaturdifferenz Δt als auch eine relativ hohe absolute Temperatur tₕ des Heizelementes sichergestellt, wodurch sich sowohl die Rußanlagerung verringert als auch der Rußabbrand verbessert.

Die Hardware des Konstantspannungs-Versorgungsmoduls ist extrem einfach und preiswert zur Verfügung zu stellen, da die Regelung einer konstanten Spannung einfach mit Standard-Bauelementen realisierbar ist. Die elektrische Heizleistung des Versorgungsmodul kann ebenfalls einfach über einen Messwiderstand bestimmt werden, an dem die abfallende Spannung des Heizungsstroms gemessen wird.

Gegenüber einem Betrieb mit konstanter Heizelement-Temperatur von beispielsweise 650 °C bis 700 °C ergibt sich bei der Erfindung der Vorteil, dass das Heizelement nur bei relativ hohen Abgas-Temperaturen tₐ mit Heizelement-Temperaturen tₕ im Bereich von 600 °C bis 700 °C betrieben werden muss. Hierdurch wird der Verschleiß des Heizelementes erheblich verringert. Ferner können bei Betrieb mit konstanter Heizelement-Temperatur sehr hohe Temperaturdifferenzen Δt von weit über 200 °C auftreten, weshalb im Falle von Kondensatsbeschlag das Heizelement beschädigt oder zerstört werden kann. Diese Gefahr besteht bei einer Steuerung des Heizelementes über eine konstante Versorgungsspannung nicht.

Durch die Ausbildung des Heizelement-Versorgungsmoduls als Konstantspannungs-Versorgungsmodul, durch das das Heizelement mit einer konstanten Versorgungsspannung betrieben wird, wird das Heizelement relativ geringem thermischen und mechanischen Stress unterworfen, und wird die Rußanlagerung auf ein Minimum reduziert.

Gemäß einer bevorzugten Ausbildung weist das Heizelement eine katalytische Beschichtung zur Senkung der Abbrandtemperatur von Abgas-Ruß auf. Durch die Senkung der Abbrandtemperatur kann auch die konstante Versorgungsspannung des Versorgungsmoduls entsprechend verringert werden, so dass der thermische und mechanische Stress für das Heizelement entsprechend verringert werden. Hierdurch wird die Lebensdauer des Massenstromsensors erhöht.

Vorzugsweise ist die konstante Versorgungsspannung U des Versorgungsmodul derart gewählt, dass das Heizelement - auch unter ungünstigen Bedingungen - nicht über 700 °C erwärmt wird. Auf diese Weise wird ein immanenter Überhitzungsschutz eingerichtet, wodurch eine Zerstörung des Heizelementes durch Überhitzung praktisch ausgeschlossen werden kann.

Im folgenden wird ein Ausführungsbeispiel der Erfindung anhand der Zeichnungen näher erläutert,

Es zeigen:
- Figur 1: eine schematische Darstellung eines Verbrennungsmotors mit einem Abgastrakt, an dem ein Massenstromsensor mit einem Heißfilm -Anemometer zur Bestimmung des Abgas-Massenstroms angeordnet ist, und
- Figur 2: einen Querschnitt des Heißfilm-Anemometers der Figur 1 mit einem Heizelement.

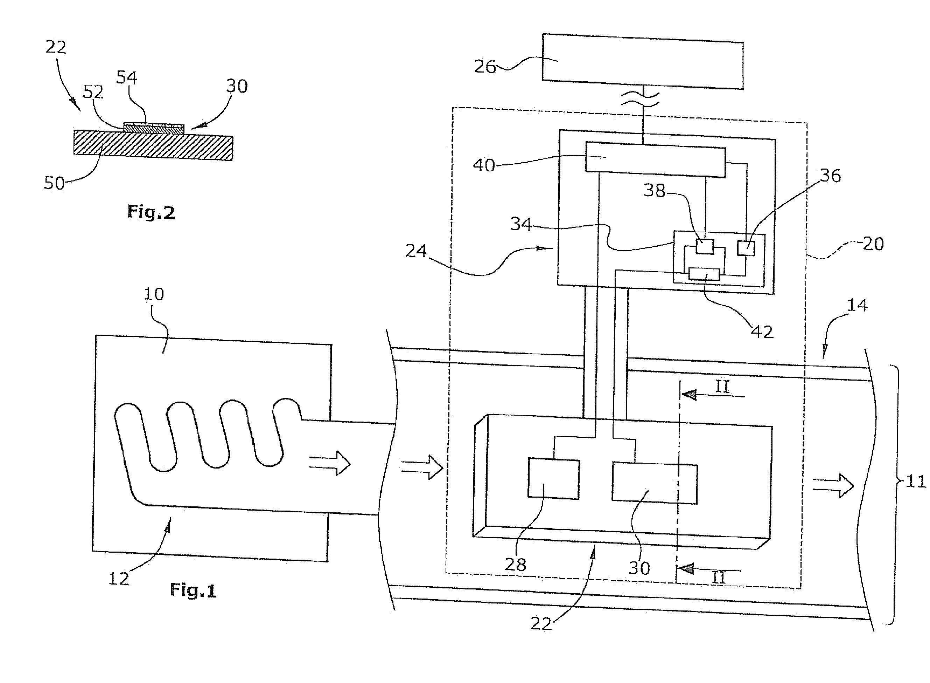

In der Figur 1 ist schematisch eine Anordnung dargestellt, die im wesentlichen von einem Verbrennungsmotor 10, einem Abgastrakt 11 und einem Verbrennungsmotor-Massenstromsensor 20 gebildet ist. Der Abgastrakt 11 gliedert sich in einen Abgaskrümmer 12 an dem Verbrennungsmotor 10 und einem sich an den Abgaskrümmer 12 anschließenden Abgasrohr 14, in dem ein Heißfilm-Anemometer 22 angeordnet ist, das ein Teil des Massenstromsensors 20 ist. Der Massenstromsensor 20 dient der Bestimmung des Abgas-Massenstroms aus dem Verbrennungsmotor 10. Der Massenstromsensor kann auch in einer Abgasrückführungs-Leitung angeordnet sein.

Der Massenstromsensor 20 gliedert sich im Wesentlichen in zwei Teile, nämlich das in dem Abgasrohr 14 angeordnete Heißfilm-Anemometer 22 und eine außerhalb des Abgasrohrs 14 angeordnete Steuerungsvorrichtung 24. Das Heißfilm-Anemometer 22 weist einen Temperatursensor 28 und ein Heizelement 30 auf.

Wie in Figur 2 detaillierter dargestellt, weist das Heißfilm-Anemometer eine elektrisch nicht-leitende keramischen Trägerplatte 50 auf, auf der ein mäanderförmig verlaufender Widerstands-Metallfilm 52 aufgebracht ist, der mit einer katalytischen Beschichtung 54 beschichtet ist. Die katalytische Beschichtung 54 verringert die Abbrandtemperatur von Ruß von circa 600°C auf circa 400°C. Der Metallfilm 52 und die Beschichtung 54 bilden zusammen das Heizelement 30.

Sowohl das Heizelement 30 als auch der Temperatursensor 28 sind über elektrische Leitungen mit der Steuerungsvorrichtung 24 verbunden. Die Steuerungsvorrichtung 24 weist ein Heizelement-Versorgungsmodul 34 und ein Auswertemodul 40 auf. Das Heizelement-Versorgungsmodul 34 ist ein Konstantspannungs-Versorgungsmodul, das das Heizelement 30 mit einer konstanten Versorgungsspannung U mit elektrischer Energie versorgt. Hierzu weist das Versorgungsmodul 34 einen Spannungsregler 36 auf, der die Versorgungsspannung zum Betrieb des Heizelementes 30 stets auf einer konstanten Spannung von beispielsweise 10,0 V hält. Die Temperatur des Heizelements 30 und der Heizstrom werden nicht geregelt.

Ferner weist das Versorgungsmodul 34 einen Messwiderstand 42 auf, an dem ein Heizleistungs-Sensor 38 über die an dem Messwiderstand 42 abfallende Spannung die aktuelle elektrische Heizleistung P bestimmt.

Der Heizleistungs-Sensor 38 ist mit dem Auswertemodul 40 verbunden. In dem Auswertemodul 40 wird aus der von den Heizleistungs-Sensor 38 ermittelten elektrischen Heizleistung und der von den Temperatursensor 28 gemessenen Abgas-Temperatur tₐ der Abgas-Massenstrom errechnet, und an eine Motorsteuerung 26 übermittelt.

## Patentansprüche

1. Verbrennungsmotorabgas-Massenstromsensor (20) zur Bestimmung des Abgas- Massenstroms, mit
einem Heißfilm-Anemometer (22), das einen Temperatursensor (28), ein elektrisches Heizelement (30) und eine Steuerungsvorrichtung (24) mit einem elektrischen Heizelement-Versorgungsmodul (34) und mit einem Auswertemodul (40) aufweist,
wobei das Auswertemodul (40) in Abhängigkeit von der durch den Temperatursensor (28) ermittelten Abgastemperatur tₐ und der von dem Versorgungsmodul (34) gelieferten elektrischen Heizleistung P den Abgas-Massenstrom bestimmt, und
wobei das Heizelement-Versorgungsmodul (34) ein Konstantspannungs-Versorgungsmodul ist und das Heizelement (30) mit einer konstanten Versorgungsspannung U betreibt.

2. Verbrennungsmotorabgas-Massenstromsensor (20) nach Anspruch 1, wobei das Heizelement (30) eine katalytische Beschichtung (54) zur Senkung der Abbrandtemperatur von Abgas-Ruß aufweist.

3. Verbrennungsmotorabgas-Massenstromsensor (20) nach einem der vorangegangenen Ansprüche, wobei die konstante Versorgungsspannung U derart gewählt ist, dass das Heizelement (30) nicht über 700 °C erwärmt wird.
